# EUROPEAN PATENT APPLICATION

(11) **EP 4 510 343 A1**
(43) Date of publication of application: **19.02.2025**
(21) Application number: 23812117.2
(22) Date of filing: 23.05.2023
(51) Int. Cl.: H01M 50/291, H01M 50/204, H01M 50/271

(54) **BATTERY MODULE AND METHOD FOR MANUFACTURING SAME**

(30) Priority: 27.05.2022 KR 20220065688; 15.05.2023 KR 20230062576
(71) Applicant: LG Energy Solution, Ltd., Seoul 07335 (KR)
(72) Inventor: LEE, Hyun Jae, Daejeon 34122 (KR); KIM, Soo Youl, Daejeon 34122 (KR); HAN, Min Hee, Daejeon 34122 (KR)
(74) Representative: Plasseraud IP
(86) International application number: PCT/KR2023/007005
(87) International publication number: WO 2023/229343

(57) **Abstract**

In a battery module according to an embodiment of the present invention, an insulation distance between a cell assembly and a frame may be secured through structural characteristics of an insulating part to prevent functional deterioration from occurring due to an electrical phenomenon, and the cell assembly may be prevented from being damaged by a spatter phenomenon occurring during welding process of the frame to improve yield of the battery module.

## Description

### TECHNICAL FIELD

The present application claims the benefit of the priority of Korean Patent Application Nos. 10-2022-0065688, filed on May 27, 2022, and 10-2023-0062576, filed on May 15, 2023, which are hereby incorporated by reference in their entirety.

The present invention relates to a battery module and a method for manufacturing the battery module.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

A cell assembly may be manufactured by accommodating a plurality of electrode assemblies in a pack, and a battery module may be manufactured by accommodating the cell assembly in a frame. When the cell assembly is disposed inside the frame, battery performance is deteriorated due to an electrical phenomenon between the frame and the cell assembly. In order to prevent this phenomenon, a method for securing an insulation distance between the frame and the cell assembly by attaching an insulating sheet to an inner surface of the frame is utilized. Therefore, in the process of manufacturing the battery module, there is a need to devise an arrangement and structure of the insulating sheet, thereby more effectively securing the insulation distance between the frame and the cell assembly.

In addition, in the process of welding a top surface of the frame in which the cell assembly is disposed, a problem in that the cell assembly is damaged due to scattering of sparks caused by welding occurs. Therefore, there is a need for the battery module having a structure that prevents damage caused by welding spatter.

### DISCLOSURE OF THE INVENTION

### TECHNICAL PROBLEM

One object of the present invention for solving the above problem is to provide a battery module that further secures an insulation distance between a cell assembly and a frame.

One object of the present invention for solving the above problem is to provide a battery module that prevents a cell assembly from being damaged due to a spatter phenomenon occurring during a welding process of a frame.

### TECHNICAL SOLUTION

A battery module according to an embodiment of the present invention may include a cell assembly, a frame in which an accommodation space is defined therein to accommodate the cell assembly, and an insulating part disposed on a first surface that is a side surface of the frame, wherein the insulating part may be disposed between the frame and the cell assembly so as to have a shape bent toward the cell assembly.

The insulating part may include a side member connected to the first surface, and a bending member connected to one end of the side member and having a shape bent toward the cell assembly.

The frame may include a body of which a front surface and a rear surface, which are disposed at front and rear sides in a longitudinal direction, are opened, and a second surface that is a surface parallel to the longitudinal direction is opened, and in which the accommodation space is defined, an end plate connected to the body by covering the front and rear surfaces, and a cover plate connected to the body by covering the second surface.

The first surface different from the second surface may be disposed on the body parallel to the longitudinal direction of the body, and the bending member may protrude from the side member so as to be bent toward the cell assembly.

The bending member may be disposed between the cell assembly and the second surface.

The bending member may protrude from the side member in a direction perpendicular to the longitudinal direction of the body.

The cell assembly may be spaced a predetermined interval from each of the front and rear surfaces, and a portion of the side member may be disposed in a space between the cell assembly and each of the front and rear surfaces.

In a state in which the cell assembly is seated in the accommodation space, a distance between the cell assembly and the second surface may be less than that between the cell assembly and each of the front and rear surfaces.

The insulating part may further include a hook member connected to the other end of the bending member and having a shape bent in a direction opposite to the direction in which the bending member is bent.

A method for manufacturing a battery module, in which a cell assembly is disposed in an accommodation space with respect to a frame, which comprises a body configured to define a first surface and an opened second surface, and a cover plate connected to the second surface to define the accommodation space therein, to manufacture the battery module, according to an embodiment of the present invention may include a disposing process of disposing an insulating part comprising a side member connected to the first surface and a bending member protruding from the side member and having a shape bent toward the cell assembly, a seating process of allowing the cell assembly to move through the second surface so as to be seated in the accommodation space, and a welding process of allowing the cover plate to cover the second surface so as to be welded to the body.

### ADVANTAGEOUS EFFECTS

According to the preferred embodiment of the present invention, the insulation distance between the cell frame and the frame may be further secured to prevent functional deterioration from occurring due to an electrical phenomenon.

According to the preferred embodiment of the present invention, the cell assembly may be prevented from being damaged by the spatter phenomenon occurring during the welding process of the frame to improve the yield of the battery module.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view of a battery module according to an embodiment.
FIG. 2 is an exploded view of a frame according to an embodiment.
FIG. 3 is a perspective view illustrating a state in which a cell assembly is seated on a body according to an embodiment.
FIG. 4 is a perspective view illustrating a state in which the cell assembly is seated on the body according to an embodiment.
FIG. 5 is an enlarged view of a portion A of FIG. 4.
FIG. 6 is an enlarged view illustrating an upper side of the portion A of FIG. 4.
FIG. 7 is a flowchart illustrating a method for manufacturing a battery module according to another embodiment.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

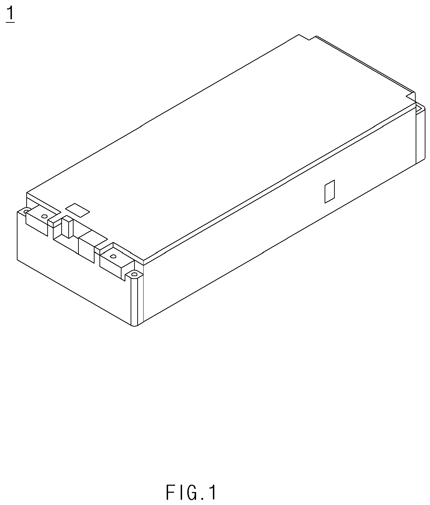

FIG. 1 is a perspective view of a battery module 1 according to an embodiment.

Referring to FIG. 1, the battery module 1 may include a plurality of battery cells to store electrical energy and output the stored electrical energy to the outside through a connection terminal. In a process of manufacturing the battery module 1 and utilizing the process, the battery module 1 may include an insulating sheet so that current does not leak from internal cells or functions of storing and outputting electrical energy are not deteriorated. In addition, in the process of manufacturing the battery module 1 by welding, the insulating sheet may have a structure protruding in a specific direction to prevent the battery cell disposed inside the battery module 1 from being damaged by welding spatter.

The battery module 1 may include a cell assembly 10, a frame 11, and an insulating part 12.

The cell assembly 10 may be an assembly of a plurality of batteries in which electrode assemblies are contained in a case such as a pack. Through such a structure, the cell assembly 10 may store a large amount of electrical energy and output and emit the electrical energy to the outside as necessary.

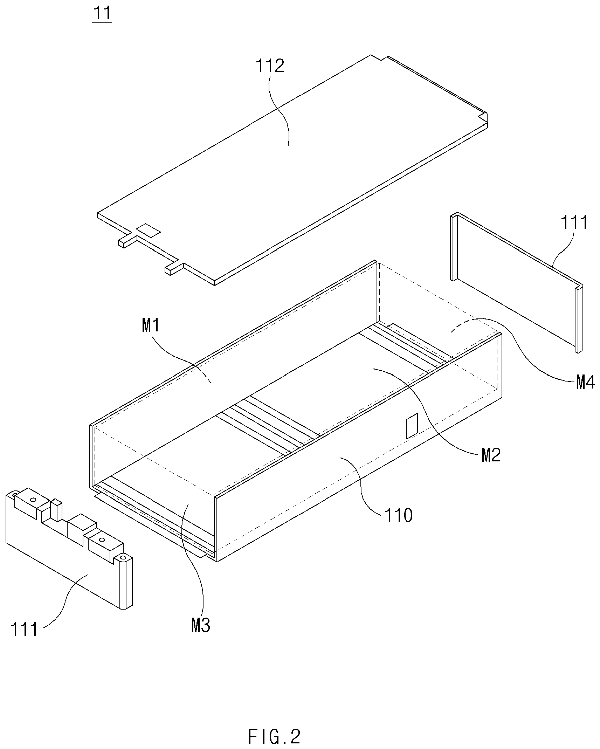

FIG. 2 is an exploded view of the frame 11 according to an embodiment.

Referring to FIG. 2, the frame 11 may accommodate the cell assembly 10 by defining an accommodation space therein. The frame 11 may protect the cell assembly 10 from an external impact and environments by blocking the cell assembly 10 and an external space in a state in which the cell assembly 10 is accommodated therein.

The frame 11 may include a body 110, an end plate 111 and a cover plate 112.

The body 110 may define an accommodation space. For example, the body 110 may have a rectangular parallelepiped shape, and a front surface M3 and a rear surface M4 of the body 110 may be disposed forward and backward in a longitudinal direction. In this case, the front surface M3 and the rear surface M4 of the body 110 may be opened to allow the accommodation space and the external space to communicate with each other.

In this case, the front surface M3 and the rear surface M4, which are described above, and a first surface M1 and a second surface M2, which are described later, may mean virtual surfaces defined by the body 110.

In addition, the first surface M1 of the body 110 may be a surface parallel to the longitudinal direction. Unlike the front surface M3 and the rear surface M4, the first surface M1 may be a surface defined by both sidewalls of the body 110 that is not opened. An insulating part 12 to be described below may be attached to an inner surface of each of the sidewalls of the body 110.

Additionally, the second surface M2 of the body 110 may be a surface parallel to the longitudinal direction. The second surface M2 of the body 110 may also be opened like the front surface M3 and the rear surface M4. In this case, the second surface M2 may mean a surface different from the first surface M1. For example, the second surface M2 may be a top surface of the body 110 that is opened to an upper side of the body 110.

According to this structure, the body 110 may include a U-shape when viewed from one side. Specifically, when viewed from the front surface M3 or the rear surface M4, the body 110 may have a U-shape.

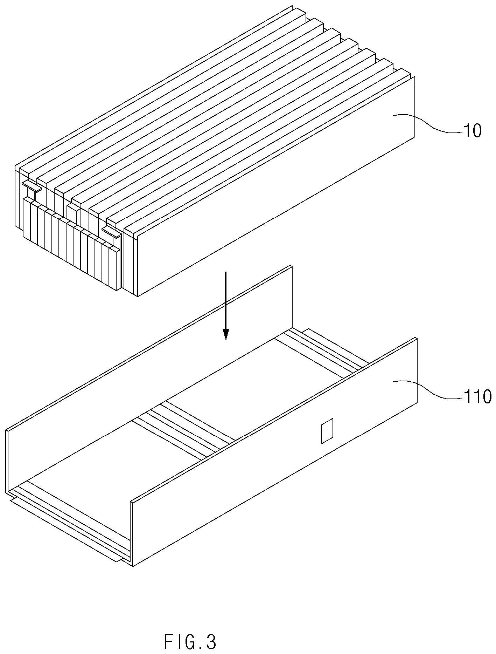

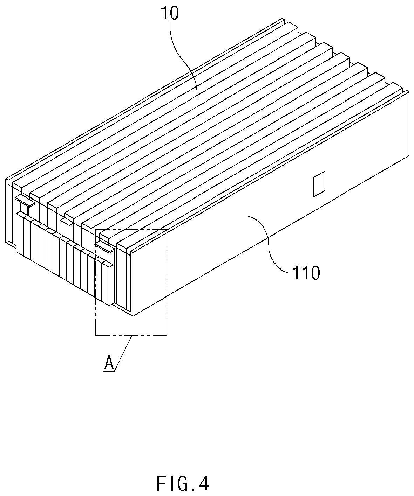

FIG. 3 is a perspective view illustrating a state in which the cell assembly 10 is seated on the body 110 according to an embodiment, and FIG. 4 is a perspective view illustrating a state in which the cell assembly 10 is seated on the body 110 according to an embodiment.

Referring to FIGS. 3 and 4, in a state in which the cell assembly 10 is disposed above the body 110, the cell assembly 10 moves into an inner accommodation space of the body 110 through the second surface M2. The cell assembly 10 may be connected to and fixed to the inner surface of the body 110 while seated in the accommodation space.

The end plate 111 may be connected to the body 110 by covering the front surface M3 and the rear surface M4 of the body 110. In other words, the end plates 111 may be disposed as a pair at front and rear sides of the body 110 in the longitudinal direction and be welded to both ends of the body 110, which correspond to the front surface M3 and the rear surface M4.

The cover plate 112 may be connected to the body 110 by covering the second surface M2 of the body 110. For example, the cover plate 112 may cover the top surface of the body 110, that is, the second surface M2 in a state in which the cell assembly 10 is accommodated inside the body 110, thereby providing the accommodation space and the external space, which block each other. In other words, the cover plate 112 may be welded to the body 110 so that the cell assembly 10 is blocked from the external space.

The insulating part 12 may secure an insulation distance between the frame 11 and the cell assembly 10. In other words, the insulating part 12 may function to prevent electricity from passing through the space between the frame 11 and the cell assembly 10. For example, the insulating part 12 may be provided inside the frame 11 and integrated with the frame 11. In other words, the insulating part 12 may be disposed between the frame 11 and the cell assembly 10. That is, the insulating part 12 may be disposed on the first surface M1, which is a side surface of the frame 11, and the cell assembly 10 may be disposed inside the frame 11 with the insulating part 12 therebetween. In addition, the insulating part 12 may have a shape bent toward the cell assembly 10. The insulating part 12 may be disposed in pair on both surfaces of the frame 11.

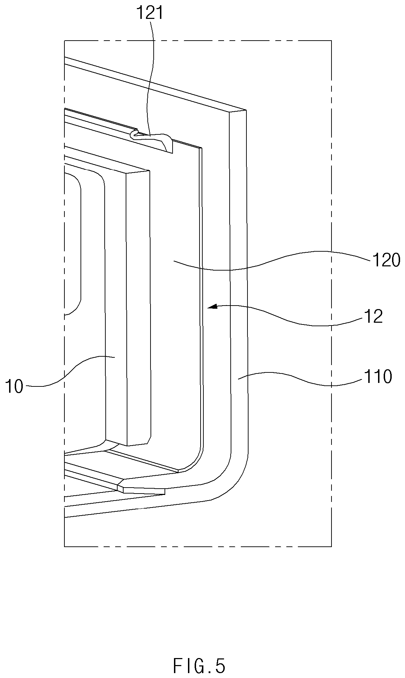

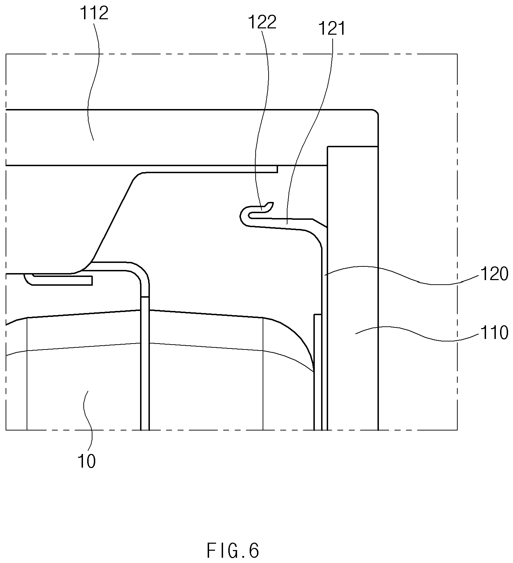

FIG. 5 is an enlarged view of a portion A of FIG. 4, and FIG. 6 is an enlarged view illustrating an upper side of the portion A of FIG. 4.

Referring to FIGS. 5 and 6, the insulating part 12 may include a side member 120 and a bending member 121.

The side member 120 may be connected to the first surface M1. In other words, the side member 120 may be connected to the inner surface of the sidewall of the body 110 defining the first surface M1 and disposed along the longitudinal direction of the body 110.

The bending member 121 may have a shape connected to one end of the side member 120 and bent toward the cell assembly 10. For example, the bending member 121 may protrude from the side member 120 and be bent toward the cell assembly 10. Specifically, the bending member 121 may protrude from one side of the side member 120 that is close to the second surface M2 of the body 110. More specifically, the bending member 121 may protrude from the side member 120 so as to be perpendicular to the longitudinal direction of the body 110.

The bending member 121 may be disposed between the cell assembly 10 and the second surface M2. In other words, the bending member 121 may be disposed between the top surface of the cell assembly 10 and the second surface M2. According to this structure, the insulation distance between the cell assembly 10 and the frame 11 may be further secured, and the bending member 121 may block welding sparks generated during the welding of the top surface of the main body 110 of the cover plate 112 from being splashed toward the cell assembly 10.

The cell assembly 10 is spaced a predetermined interval from the front surface M3 and the rear surface M4, and a portion of the side member 120 may be provided in the space between the cell assembly 10 and the front surfaces M3 and M4. That is, as viewed from the upper side, the side member 120 may be disposed on each of both surfaces of the cell assembly 10, and the side member 120 may be disposed to be elongated in the longitudinal direction and then be connected to the front surface M2 and the rear surface M4 of the body 110.

In a state in which the cell assembly 10 is seated in the accommodation space, a distance between the cell assembly 10 and the second surface M2 may be less than that between the cell assembly 10 and each of the front surface M3 and the rear surface M4. Therefore, the bending member 121 may be disposed at the upper side of the side member 120 instead of the front and rear sides of the side member 120 so that an insulation distance between the top surface of the cell assembly 10 and the second surface M2 of the body 110, i.e., the cover plates 112 is secured more.

The insulating part 12 may further include a hook member 122 having a shape bent in a direction opposite to the direction in which the bending member 121 is bent. For example, one end of the bending member 121 may be connected to the side member 120, and the hook member 122 may be connected to the other end of the bending member 121. The hook member 122 may include a ring shape. In addition, one end of the hook member 122 may be connected to the other end of the bending member 121, and the other end of the hook member 122 may include a shape that is bent toward the second surface M2 of the body 110.

As a result, according to the structural characteristics of the insulating part 12 as described above, the insulating part 12 may further secure the insulation distance between the frame 11 and the cell assembly. Specifically, the insulation distance may be classified into a clearance distance and a creepage distance. Here, the clearance distance means the shortest distance crossing air between two conductive objects, and the creepage distance means the shortest distance along the surface of the insulating material between the two conductive objects. That is, in terms of both the clearance distance and the creepage distance, the insulation distance between the frame 11 and the cell assembly 10 may be more secured through the structural characteristics of the bending member 121 bent toward the cell assembly 10 and the structural characteristic of the hook member 122 bent again in the opposite direction.

In addition, the battery module 1 may effectively utilize the insulating structure by disposing the bending member 121 and the hook member 122 between the cover plate 112 and the cell assembly 10 in that the distance between the cover plate 112 and the cell assembly 10 is shorter than between the end plate 111 and the cell assembly 10.

Specifically, the clearance distance secured by the bending member 121 and the hook member 122 may mean the insulation distance between the cell assembly 10 and the body 110. More specifically, the clearance distance may mean a distance between the top surface of the cell assembly 10 and the inner surface of the body 110. That is, the clearance distance may mean an insulation distance between the inner surface of the body 110, to which the insulating part 12 is attached, and the top surface of the cell assembly 10. In this case, the clearance distance may be 2 mm to 8 mm by the bending member 121 and the hook member 122.

When the clearance distance is less than 2 mm, an insulation distance between components inside the battery module 1 may not be secured, and thus, short circuit may occur. In other words, if the clearance distance between the top surface of the cell assembly 10 and the inner surface of the body 110 is 2 mm or less due to the characteristics of the battery module 1 accommodating the cell assembly 10, current may flow between the cell assembly 10 and the main body 110 to a short-circuit phenomenon, thereby causing damaging or breakage of the battery module.

In addition, when the clearance distance exceeds 8 mm, since the bending member 121 and the hook member 122 have to be longer, a problem in that energy density of the battery module is lowered, or a weight of the battery module unnecessarily increases may occur by excessively occupying a space inside the battery module. In addition, the elongated bending member 121 and the hook member 122 are inclined toward the cell assembly 10, and a problem in that the insulation distance is not properly secured may occur.

Additionally, the creepage distance secured by the bending member 121 and the hook member 122 may mean the distance from the cell assembly 10 to the inner surface of the body 110 along an outer surface of the insulating part 12. In this case, the creepage distance may be 8 mm to 16 mm by the bending part 12.

When the creepage distance is less than 8mm, an insulation distance between components inside the battery module 1 may not be secured, and thus, short circuit may occur. In other words, when a distance from the top surface of the cell assembly 10 to the inner surface of the body 110 along the outer surface of the insulating part 12 is less than 8 mm, the short circuit between the cell assembly 10 and the body 110 may occur, and thus, current may pass between the cell assembly 10 and the body 110. That is, the battery module may be damaged or broken due to the short circuit, and thus, a risk problem such as fire may occur.

When the creepage distance exceeds 16 mm, similarly, since the bending member 121 and the hook member 122 have to be longer, a problem in that energy density of the battery module is lowered, or a weight of the battery module unnecessarily increases may occur by excessively occupying a space inside the battery module. In addition, the elongated bending member 121 and the hook member 122 are inclined toward the cell assembly 10, and a problem in that the insulation distance is not properly secured may occur.

However, the above numerical ranges for the clearance distance and the creepage distance may be only examples, and the above numerical ranges may vary depending on design methods and application environments, such as a model of the battery module and the used voltage.

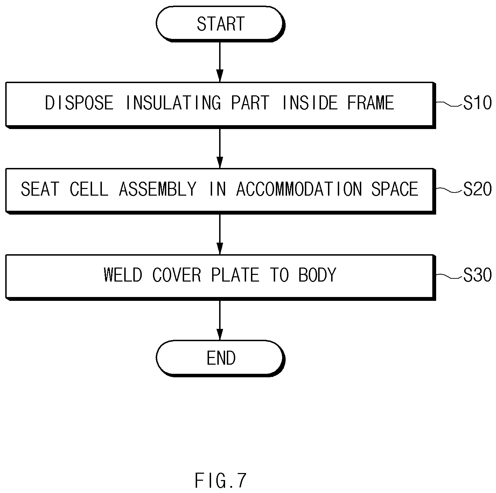

FIG. 7 is a flowchart illustrating a method for manufacturing a battery module 1 according to another embodiment.

Referring to FIG. 7, an insulating part 12 may be connected to the inside of a frame 11 so that a cell assembly 10 accommodated therein is not damaged, and a function of the battery module 1 is not deteriorated through the method for manufacturing the battery module 1. For example, in a process of welding the frame 11, the cell assembly 10 may be prevented from being damaged due to welding spatter to improve yield of the battery module 1 and also improve the process of manufacturing the battery module 1.

In this case, as described above, the frame 11 may include a body 110, an end plate 111, and a cover plate 112. In addition, the body 110 may define a first surface M1, a second surface M2, a front surface M3, and a rear surface M4.

The method for manufacturing the battery module 1 may include a disposing process (S10), a seating process (S20), and a welding process (S30).

In the disposing process (S10), an insulating part 12 may be disposed inside the frame 11. In other words, as described above, the insulating part 12 may include a side member 120, a bending member 121, and a hook member 122. The side member 120 may be disposed on each of both sidewalls of the body 110 in a longitudinal direction of the body 110, and the bending member 121 may protrude from an upper portion of the side member 120 toward the cell assembly 10.

In the seating process (S20), the cell assembly 10 may move to be seated in an accommodation space. For example, in a state in which the cell assembly 10 is disposed above the body 110, the cell assembly 10 moves into an inner accommodation space of the body 110 through the second surface M2.

In the welding process (S30), the cover plate 112 may be welded and connected to the body 110 by covering the second surface M2.

According to this sequence, welding sparks generated by welding the cover plate 112 and the body 110 may be scattered toward the cell assembly 10, and the insulating part 12 may block the welding sparks from reaching the cell assembly 10 to prevent the cell assembly 10 from being damaged.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

1: Battery module
10: Cell assembly
11: Frame
12: Insulating part
110: Body
111: End plate
112: Cover plate
120: Side member
121: Bending member
122: Hook member
M1: First surface of body
M2: Second surface of body
M3: Front surface of body
M4: Rear surface of body
S10: Disposing process
S20: Seating process
S30: Welding process

## Claims

1. A battery module comprising:
a cell assembly;
a frame in which an accommodation space is defined therein to accommodate the cell assembly; and
an insulating part disposed on a first surface that is a side surface of the frame,
wherein the insulating part is disposed between the frame and the cell assembly so as to have a shape bent toward the cell assembly.

2. The battery module of claim 1, wherein the insulating part comprises:
a side member connected to the first surface; and
a bending member connected to one end of the side member and having a shape bent toward the cell assembly.

3. The battery module of claim 2, wherein the frame comprises:
a body of which a front surface and a rear surface, which are disposed at front and rear sides in a longitudinal direction, are opened, and a second surface that is a surface parallel to the longitudinal direction is opened, and in which the accommodation space is defined;
an end plate connected to the body by covering the front and rear surfaces; and
a cover plate connected to the body by covering the second surface.

4. The battery module of claim 3, wherein the first surface different from the second surface is disposed on the body parallel to the longitudinal direction of the body, and
the bending member protrudes from the side member so as to be bent toward the cell assembly.

5. The battery module of claim 4, wherein the bending member is disposed between the cell assembly and the second surface.

6. The battery module of claim 4, wherein the bending member protrudes from the side member in a direction perpendicular to the longitudinal direction of the body.

7. The battery module of claim 4, wherein the cell assembly is spaced a predetermined interval from each of the front and rear surfaces, and
a portion of the side member is disposed in a space between the cell assembly and each of the front and rear surfaces.

8. The battery module of claim 4, wherein, in a state in which the cell assembly is seated in the accommodation space, a distance between the cell assembly and the second surface is less than that between the cell assembly and each of the front and rear surfaces.

9. The battery module of claim 2, wherein the insulating part further comprises a hook member connected to the other end of the bending member and having a shape bent in a direction opposite to the direction in which the bending member is bent.

10. A method for manufacturing a battery module, in which a cell assembly is disposed in an accommodation space with respect to a frame, which comprises a body configured to define a first surface and an opened second surface, and a cover plate connected to the second surface to define the accommodation space therein, to manufacture the battery module, the method comprising:
a disposing process of disposing an insulating part comprising a side member connected to the first surface and a bending member protruding from the side member and having a shape bent toward the cell assembly;
a seating process of allowing the cell assembly to move through the second surface so as to be seated in the accommodation space; and
a welding process of allowing the cover plate to cover the second surface so as to be welded to the body.
